# EUROPEAN PATENT APPLICATION

(11) **EP 2 824 537 A1**
(43) Date of publication of application: **14.01.2015**
(21) Application number: 14159644.5
(22) Date of filing: 13.03.2014
(51) Int. Cl.: G06F 1/16

(54) **Wearable device and the method for controlling the same**

(30) Priority: 08.07.2013 KR 20130079650
(71) Applicant: LG Electronics, Inc., Seoul 150-721 (KR)
(72) Inventor: Lee, Junggi, Yeongdeungpo-gu, Seoul (KR); Lee, Kwangwon, 137-893 Seoul (KR)
(74) Representative: Ter Meer Steinmeister & Partner

(57) **Abstract**

A wearable device includes a receiving unit configured to receive a signal transmitted from an external input means, a storage module configured to store a weight on an input data of the external input means, a communication module configured to perform a data communication with an external display device paired with the wearable device, a display module configured to output information, and a controller configured to control the display module, if a first input means modification signal is received from the external input means by the receiving unit, the controller configured to apply a predetermined weight to an input data of a sensed external input means by accessing the storage module when a first input means modification signal is received from the external input means by the receiving unit, map with a pointer value of the wearable device and control the information outputted via the display module of the wearable device based on the mapped pointer value.

## Description

This application claims the benefit of the Korean Patent Application No. 10-2013-0079650, filed on July 08, 2013.

### BACKGROUND OF THE INVENTION

### Field of the Invention

The present invention relates to a technology applicable to various wearable devices, and more particularly, to a wearable device configured to receive at least one contents information by performing pairing and data communication with a display device and control the at least one contents information based on input data of an external input means and a method of controlling therefor.

### Discussion of the Related Art

As technologies have been developing, development for a wearable device is accelerating. The wearable device means a device capable of naturally being worn on a body such as clothes, a watch, glasses, and an accessory and includes all functions of a display device, a speaker, and the like. While a smartphone and a tablet PC are conveniently used by a finger or a touch pen, the wearable device can be worn on a wrist or can be worn like glasses. Hence, mobility of the wearable device may be more superior to that of the smartphone and the tablet PC.

The wearable device can provide various conveniences as well as a simple display function to a user in a manner of being combined with an augmented reality technology, an N screen technology, and the like. And, contents of a display device can be output in the wearable device by performing data communication with various display devices.

### SUMMARY OF THE INVENTION

Accordingly, the present invention is directed to an apparatus and method thereof that substantially obviate one or more problems due to limitations and disadvantages of the related art.

An object of one embodiment of the present invention is to control information outputted from a wearable device by a pointer value based on input data of an external input means in a manner of applying a predetermined weight to the input data of the external input means.

Another object of a different embodiment of the present invention is to enhance user convenience in a manner of modifying output of the wearable device based on an event occurred in an external display device paired with the wearable device.

The other object of a further different embodiment of the present invention is to specifically define a problem-solving plan or a solution to efficiently use a plurality of display devices in a manner of receiving a specific content information from an external display device paired with the wearable device and outputting a GUI in which the received content information is rearranged in the wearable device.

Additional advantages, objects, and features of the invention will be set forth in part in the description which follows and in part will become apparent to those having ordinary skill in the art upon examination of the following or may be learned from practice of the invention. The objectives and other advantages of the invention may be realized and attained by the structure particularly pointed out in the written description and claims hereof as well as the appended drawings.

To achieve these objects and other advantages and in accordance with the purpose of the invention, as embodied and broadly described herein, according to one embodiment of the present invention, a wearable device includes a receiving unit configured to receive a signal transmitted from an external input means, a storage module configured to store a weight on an input data of the external input means, a communication module configured to perform a data communication with an external display device paired with the wearable device, a display module configured to output information, and a controller configured to apply a predetermined weight to an input data of a sensed external input means by accessing the storage module when a first input means modification signal is received from the external input means by the receiving unit, map with a pointer value of the wearable device and control the information outputted via the display module of the wearable device based on the mapped pointer value.

To further achieve these and other advantages and in accordance with the purpose of the present invention, according to one embodiment, a method of controlling a wearable device includes the steps of performing a pairing with an external display device outputting at least one content, receiving a first input means modification signal from an external input means, applying a predetermined weight to an input data of the sensed external input means and mapping with a pointer value of the wearable device, and controlling information outputted via a display module of the wearable device based on the mapped pointer value.

According to one embodiment of the present invention, it is able to control information outputted from a wearable device by a pointer value based on input data of an external input means in a manner of applying a predetermined weight to the input data of the external input means.

According to a different embodiment of the present invention, it is able to enhance user convenience in a manner of modifying output of the wearable device based on an event occurred in an external display device paired with the wearable device.

According to a further different embodiment of the present invention, it is able to specifically define a problem-solving plan or a solution to efficiently use a plurality of display devices in a manner of receiving a specific content information from an external display device paired with the wearable device and outputting a GUI in which the received content information is rearranged in the wearable device.

It is to be understood that both the foregoing general description and the following detailed description of the present invention are exemplary and explanatory and are intended to provide further explanation of the invention as claimed.

### BRIEF DESCRIPTION OF THE DRAWINGS

The accompanying drawings, which are included to provide a further understanding of the invention and are incorporated in and constitute a part of this application, illustrate embodiment(s) of the invention and together with the description serve to explain the principle of the invention. In the drawings:
FIG. 1 is a diagram for explaining an example of a wearable device according to one embodiment of the present invention;
FIG. 2 is a diagram for explaining an example of determining a notification device by a wearable device according to one embodiment of the present invention;
FIG. 3 is a diagram for explaining an example of performing a pairing with an external display device by a wearable device according to one embodiment of the present invention;
FIG. 4 is a detail block diagram for components of a wearable device according to a different embodiment of the present invention;
FIG. 5 is a more detail block diagram of a control unit depicted in FIG. 4;
FIG. 6 is a diagram for an exterior of a remote controller according to one embodiment of the present invention;
FIG. 7 is a detail block diagram for components of a remote controller of FIG. 6;
FIG. 8 is a detail block diagram for a configuration module of a wearable device according to one embodiment of the present invention;
FIG. 9 is a diagram for explaining an example of receiving a first input means modification signal from an external input means by a wearable device according to one embodiment of the present invention;
FIG. 10 is a diagram for explaining a different example of receiving a first input means modification signal from an external input means by a wearable device according to one embodiment of the present invention;
FIG. 11 is a diagram for explaining an example that an output of a wearable device is modified based on an event occurred in an external display device paired with the wearable device;
FIG. 12 is a diagram for explaining a different example that an output of a wearable device is modified based on an event occurred in an external display device paired with the wearable device.
FIG. 13 is a diagram for explaining an example of receiving specific content information from an external display device by a wearable device paired with the external display device;
FIG. 14 is a diagram for explaining a different example of receiving specific content information from an external display device by a wearable device paired with the external display device;
FIG. 15 is a diagram for explaining an example of receiving specific content information from an external display device and outputting a GUI in which the received content information is rearranged by a wearable device paired with the external display device according to one embodiment of the present invention;
FIG. 16 is a diagram for explaining a different example of receiving specific content information from an external display device and outputting a GUI in which the received content information is rearranged by a wearable device paired with the external display device according to one embodiment of the present invention;
FIG. 17 is a diagram for explaining an example of outputting specific content information and detecting a predetermined motion input from a pointer value by a wearable device according to one embodiment of the present invention;
FIG. 18 is a diagram for explaining an example of receiving a second input means modification signal from an external input means by a wearable device according to one embodiment of the present invention;
FIG. 19 is a diagram for explaining a different example of receiving a second input means modification signal from an external input means by a wearable device according to one embodiment of the present invention;
FIG. 20 is a flowchart for a method of controlling a wearable device according to one embodiment of the present invention.

### DETAILED DESCRIPTION OF THE INVENTION

In the following description, the present invention is explained in detail with reference to drawings.

A suffix 'module' and 'unit' for a composing element in the following description is simply used for clarity of writing the present specification. Thus, the 'module' and the 'unit' can be used in a manner of being mixed.

Moreover, while the embodiments of the present invention have been concretely described with reference to the attached diagrams and the contents written on the diagrams, the present invention may be non-restricted or non-limited to the embodiments.

Although terminologies used in the present specification are selected from general terminologies used currently and widely in consideration of functions, they may be changed in accordance with intentions of technicians engaged in the corresponding fields, customs, advents of new technologies and the like. Occasionally, some terminologies may be arbitrarily selected by the applicant(s). In this case, the meanings of the arbitrarily selected terminologies shall be described in the corresponding part of the detailed description of the specification. Therefore, terminologies used in the present specification need to be construed based on the substantial meanings of the corresponding terminologies and the overall matters disclosed in the present specification rather than construed as simple names of the terminologies.

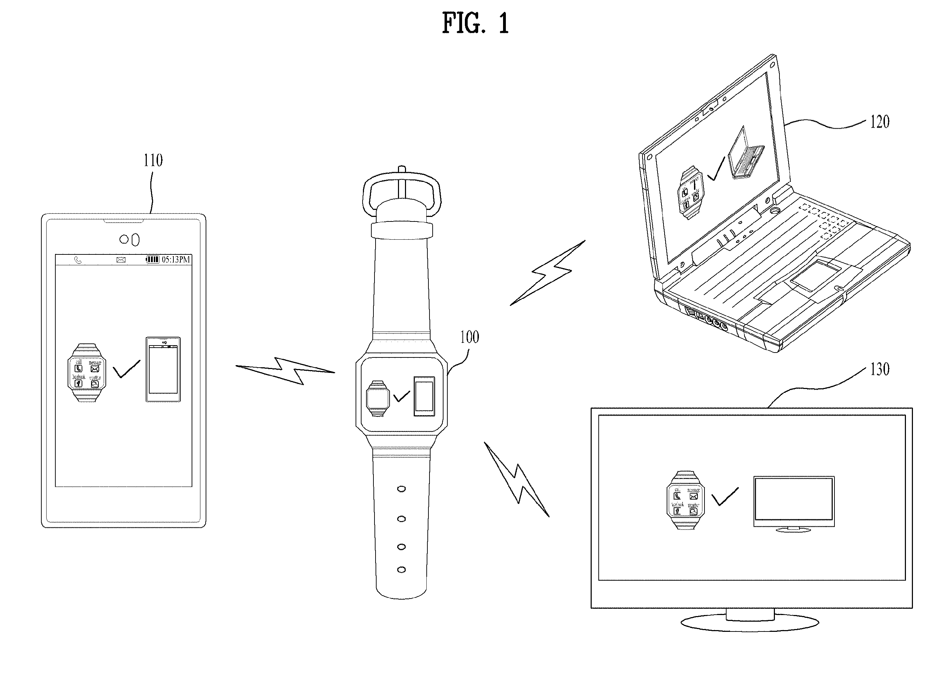

FIG. 1 is a diagram for explaining an example of a wearable device according to one embodiment of the present invention. More specifically, FIG. 1 is a diagram for explaining an example that a wearable device performs a pairing with such an external display device as a smartphone.

A wearable device 100 according to one embodiment of the present invention can perform a pairing with external display devices 110/120/130. As depicted in FIG. 1, the external display device includes a smartphone 110, a notebook 120, a television (TV) 130, and the like.

A pairing indicates a connection between the wearable device 100 and the external display device 110/120/130 to transceive data with each other. In case of performing a pairing, the wearable device 100 and the external display device 110/120/130 perform a communication access. By doing so, bidirectional data transmission and reception is enabled. A pairing with the external display device 110/120/130 can be performed using a network interface included in the wearable device 100. And, the pairing can be performed by Bluetooth, NFC (near field communication), and the like. As an example, the pairing can be performed by a user input via the wearable device 100 or the external display device 110/120/130. In this case, the user input can include a touch input, a voice input, and the like. For instance, the wearable device 100 can provide a separate button or a user interface to perform a communication access with the external display device 110/120/130. And, a user can perform a communication access between the wearable device and the external display device 110/120/130 via the user input using the button or the user interface.

When the communication access is performed, the wearable device 100 can transceive data with the external display device in a state that a session is opened. Meanwhile, the wearable device 100 can selectively transceive data with the external display devices 110/120/130 by performing the communication access via the pairing.

And, the wearable device 100 performs data communication with the external display device 110/120/130 via the pairing and can identically output an image outputted in the external display device 110/120/130. Moreover, such data related to an image outputted in the external display device as searching via a web browser and the like can be outputted in the wearable device 100.

And, the wearable device 100 detects the paired external display devices 110/120/130 and may be then able to determine a notification device, which is going to provide a notification for an event occurred in the wearable device 100 or the external display devices 110/120/130. In this case, the notification device may correspond to a device providing a notification for an event occurred in at least one of the wearable device 100 and the external display device 110/120/130. In the present specification, the notification device may include at least one of the wearable device 100 and the external display device 110/120/130.

In this case, the event occurred in at least one of the wearable device 100 and the external display device 110/120/130 may correspond to a state change occurred in at least one of the wearable device 100 and the external display device 110/120/130. For instance, the event can include a call reception, text reception, new message reception of an SNS (social networking service), a schedule notification, a weather notification, and the like. And, the notification for the occurred event may correspond to notifying the aforementioned event to a user. For instance, the notification can be implemented by a form of a text notification, a voice notification, a vibration notification, and the like. The notification device can be determined according to whether the wearable device 100 is worn, whether the wearable device is paired with the external display device 110/120/130, a distance between the wearable device 100 and the external display device 110/120/130, and the like.

Meanwhile, in the present specification, in determining the notification device including at least one of the wearable device 100 and the external display device 110/120/130, the external display device 110/120/130 and the wearable device 100 can be configured as a main device and a sub device, respectively. In this case, since the external display device 110/120/130 has priority to be determined as the notification device, a notification can be provided to a user by the external display device 110/120/130. Yet, unlike the aforementioned description, the wearable device 100 and the external display device 110/120/130 can also be configured as a main device and a sub device, respectively.

As an example, the wearable device 100 can determine a notification device providing a notification to at least one of the wearable device 100 and the external display device 110/120/130 based on a wearing mode or a non-wearing mode of the wearable device 100. For instance, in the wearing mode of the wearable device 100, the wearable device 100 can determine the wearable device 100 as the notification device. In this case, the wearable device can provide a notification for an event occurred in at least one of the wearable device and the external display device 110/120/130 in the wearable device 100. And, for instance, in the non-wearing mode of the wearable device 100, the wearable device 100 can determine the external display device 110/120/130 as the notification device. As a different example, the wearable device 100 can determine a notification device providing a notification to at least one of the wearable device 100 and the external display device 110/120/130 based on a presence or non-presence of the external display device 110/120/130 paired with the wearable device 100. For instance, if there is no external display device 110/120/130 paired with the wearable device 100, the wearable device 100 can determine the wearable device 100 as the notification device. And, for instance, if there exists the external display device 110/120/130 paired with the wearable device, the wearable device 100 can determine at least one of the wearable device 100 and the external display device 110/120/130 as the notification device.

And, as a different example, the wearable device can determine a notification device providing a notification for least one of the wearable device 100 and the external display device 110/120/130 based on a distance between the wearable device 100 and the paired external display device 110/120/130. For instance, if the wearable device 100 and the external display device 110/120/130 are positioned within a predetermined distance range, the external display device 110/120/130 can be determined as the notification device. And, for instance, if the wearable device 100 and the external display device 110/120/130 are positioned beyond the predetermined distance range, the wearable device 100 and the external display device 110/120/130 may be determined as the notification device.

Besides, the wearable device 100 can determine a notification device based on a mode of the wearable device 100 and a distance between the wearable device 100 and the external display device 110/120/130.

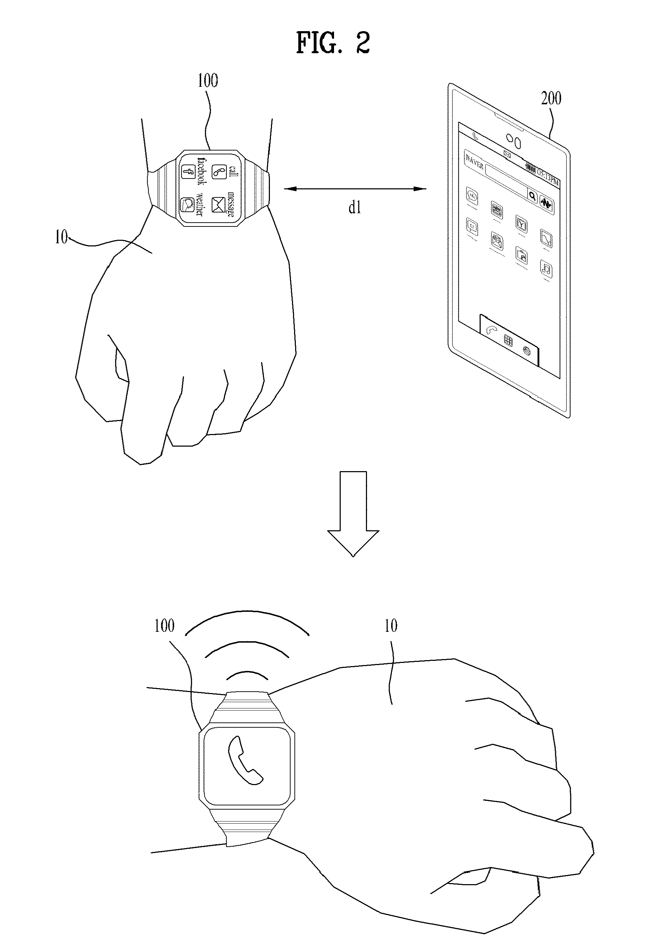

FIG. 2 is a diagram for explaining an example of determining a notification device by a wearable device according to one embodiment of the present invention.

The wearable device 100 can detect an external display device 200 paired with the wearable device 100. As mentioned earlier in FIG. 1, the wearable device 100 can transceive data with the external display device 200 by performing a pairing with various external display device 200 capable of performing data communication. Referring to FIG. 2, the wearable device 100 can detect the external display device 200 paired with the wearable device 100, i.e., a smartphone.

And, the wearable device 100 can detect an event occurred in at least one of the wearable device 100 and the external display device 200. In this case, the occurred event indicates a mode change while a user uses the wearable device 100 or the external display device 200. As mentioned earlier in FIG. 1, the occurred event may include a call reception, a text reception, power-off, a weather notification, a schedule notification, and the like. Referring to FIG. 2, the occurred event may correspond to a call reception event occurred in at least one of the wearable device 100 and the external display device 200.

And, a notification for the event occurred in at least one of the wearable device and the external display device 200 can be provided via a notification device. More specifically, the wearable device 100 determines a notification device providing a notification for the event occurred in at least one of the wearable device 100 and the external display device 200 and the notification can be provided by the determined notification device. In this case, the notification occurred in at least one of the wearable device and the external display device may include a voice notification, a text notification, a vibration notification, an image notification, and the like.

Referring to FIG. 2, the wearing device 100 paired with the external display device 200 in the wearing mode is positioned at a d1 distance from the external display device. In this case, the d1 distance may correspond to a distance shorter than a predetermined distance (d). In particular, the d1 distance may correspond to a distance within a predetermined distance range. And, a distance between the wearable device 100 and the external display device 200 can be obtained based on a transmission/reception signal between the two devices, which are communication accessed to each other via a pairing. In this case, the wearable device 100 can determine the wearable device 100 as a notification device. This is because although the external display device 200 corresponds to a main device, it is easy to recognize an event by the wearable device 100 in a state that a user wears the wearable device 100. Hence, referring to FIG. 2, in case that the wearable device 100 detects a call reception event, the wearable device 100 can provide a notification related to a call reception in response to the call reception event.

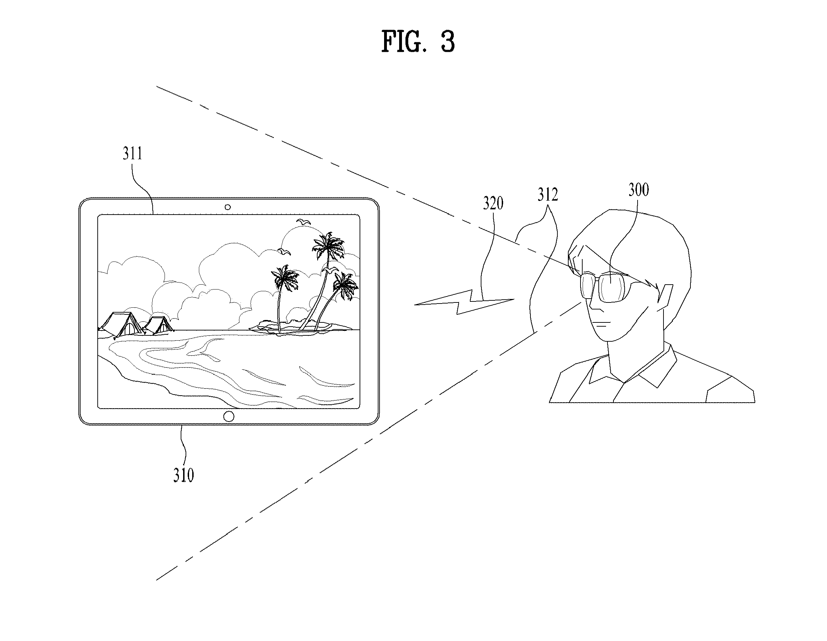

FIG. 3 is a diagram for explaining an example of performing a pairing with an external display device by a wearable device according to one embodiment of the present invention.

An external display device 310 can output various types of contents. For instance, the external display device 310 can output such various multimedia contents as a live broadcast, a movie, music, a drama, a web page, a game, an application, and the like. The external display device 310 is equipped with at least one display unit 311 and the content outputted from the external display device 310 can be displayed by the display unit 311. Meanwhile, the external display device 310 can be equipped with a communication unit (not depicted) and data transmission and reception with the wearable device 300 and other external display devices can be performed via the communication unit. In the present invention, the external display device 310 includes various electronic devices equipped with the display unit and the communication unit. For instance, the display device 310 includes such various devices capable of displaying an image and performing a data communication as a PC, a PDA (personal digital assistant), a notebook, a tablet, a television, and the like.

Meanwhile, the wearable device 300 depicted in FIG. 3 can perform a job in a manner of being coupled with the external display device 310. For the interlocking between the wearable device 300 and the external display device 310, a separate pairing or a communication access can be performed. The pairing or the communication access can be performed by a user input via the wearable device 300 or the external display device 310. For instance, the wearable device 300 can provide a separate button or a user interface to perform the pairing or the communication access and a user can perform the pairing or the communication access between the wearable device 300 and the external display device 310 via a user input using the button or the user interface.

The wearable device 300 can display an image via a display unit installed in the wearable device. For instance, the wearable device can display a user interface of the wearable device 300 itself, a response for a user input, and the like and can display various contents in a manner of being coupled with the external display device 310 connected with a network 320. The wearable device 300 according to one embodiment of the present invention may have an angle of view area 312 of a predetermined range. The angle of view area 312 is a predetermined area corresponding to a vision of a user wearing the wearable device 300 and may have a section of a prescribed angle range to a direction to which the wearable device 300 faces.

The wearable device 300 according to one embodiment of the present invention can detect whether the external display device 310 coupled with the wearable device 300 is positioned at the angle of view area 312 of the wearable device 300. In particular, the wearable device 300 can detect position information of the external display device 310 interlocked with the wearable device. In the present invention, the position information may include a first position information indicating that a display unit 311 of the external display device 310 is positioned at the angle of view area 312 of the wearable device 300 and a second position information indicating that the display unit 311 of the external display device 310 is not positioned at the angle of view area 312 of the wearable device 300.

Meanwhile, in the present invention, the network 320 may include a wired or a wireless network of various forms enabling a communication to be performed between the wearable device 300 and the external display device 310. In this case, an available wireless network includes NFC, Zigbee, infrared-ray communication, Bluetooth, WiFi, and the like, by which the present invention may be non-limited. In the present invention, the communication between the wearable device 300 and the external display device 310 may be performed using a prescribed one among the aforementioned networks 320 or may be performed by a combination thereof.

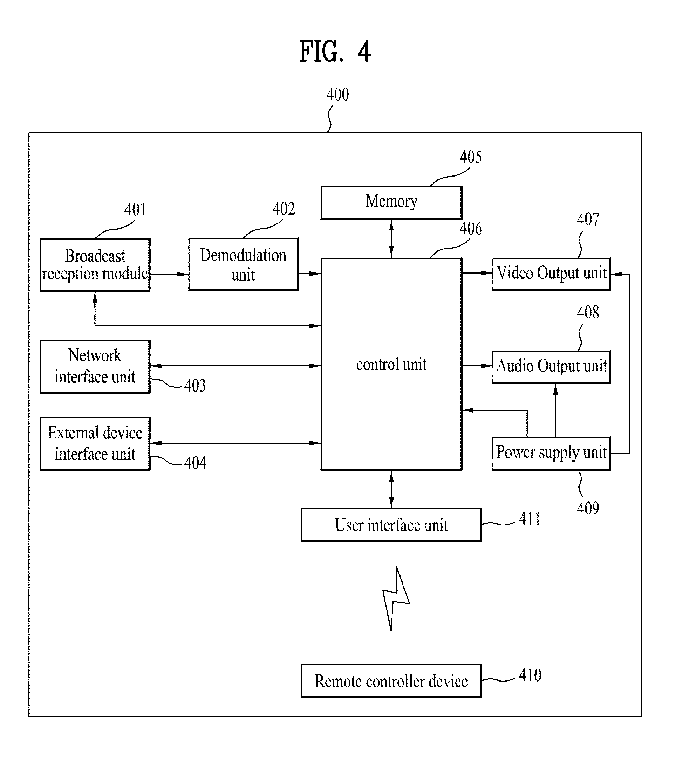

FIG. 4 is a detail block diagram for components of a wearable device according to a different embodiment of the present invention.

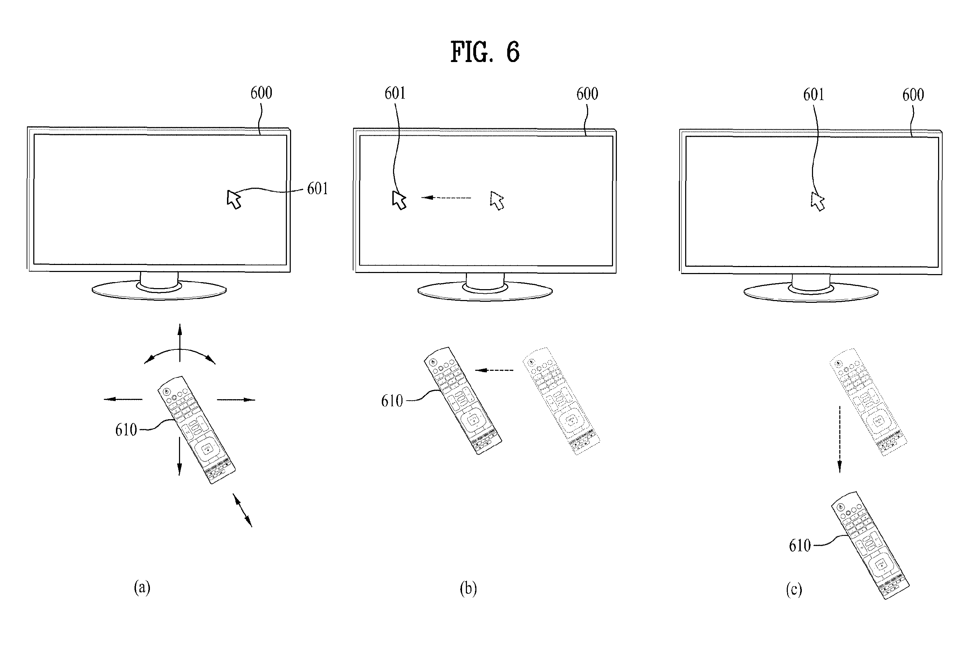

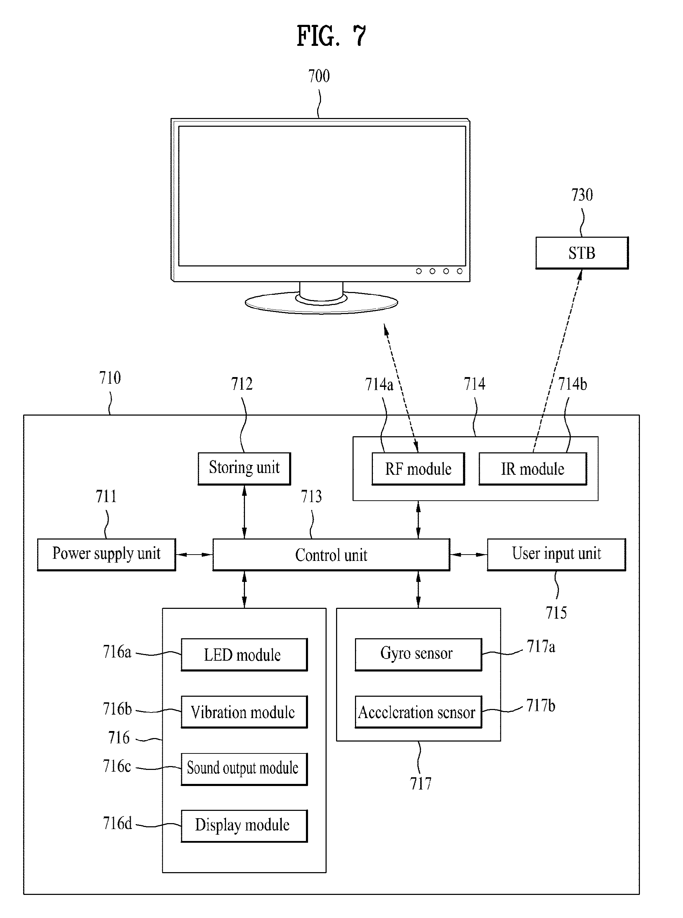

As depicted in FIG. 4, a wearable device 400 according to a different embodiment of the present invention consists of a broadcast reception module 401, a demodulation unit 402, a network interface unit 403, an external device interface unit 404, a memory 405, a control unit 406, a video output unit 407, an audio output unit 408, a power supply unit 409, a remote controller device 410, a user interface unit 411, and the like. Meanwhile, the wearable device 400 is designed to perform a data communication with a remote controller corresponding to the remote controller device 410. The remote controller device is explained as the remote controller in the following description. The remote controller shall be described in detail with reference to FIG. 6 and FIG. 7.

For instance, the broadcast reception module 401 can be designed by an RF tuner or an interface receiving a broadcast data from such an external device as an STB and the like.

For instance, the broadcast reception module 401 can receive an RF broadcast signal of a single carrier according to an ATSC (advanced television system committee) scheme or an RF broadcast signal of a plurality of carriers according to a DVB (digital video broadcasting) scheme.

The demodulation unit 402 performs a demodulation operation in a manner of receiving a digital IF signal (DIF) converted in the broadcast reception module 401.

For instance, if the digital IF signal outputted from the broadcast reception module 401 corresponds to the ATSC scheme, the demodulation unit 402 performs 8-VSB (8-vestigal side band) demodulation. And, the demodulation unit 402 may perform a channel decoding.

The external device interface unit 404 is an interface enabling a data communication to be performed between an external device and the wearable device 400. The external device interface unit 404 can be connected with such an external device as a DVD (digital versatile disk), a Blue-ray, a gaming device, a camera, a camcorder, a computer (notebook), an STB, and the like in wired or wireless. The external device interface unit 404 delivers a video, an audio, or a data signal inputted from an external to the control unit 406 via the connected external device. And, the external device interface unit can output the video, the audio, or the data signal processed in the control unit 406 to the external device.

For instance, the external device interface unit 404 may include a USB terminal, a CVBS (composite video banking sync) terminal, a component terminal, an S-video terminal (analog), a DVI (digital visual interface) terminal, an HDMI (high definition multimedia interface) terminal, an RGB terminal, a D-SUB terminal, and the like.

The network interface unit 403 provides an interface to connect the wearable device 400 to a wired/wireless network including the internet network. For instance, the network interface unit 403 can be equipped with an Ethernet terminal and the like to access a wired network and may use such a communication standard as WLAN (wireless LAN)(WiFi), Wibro (wireless broadband), Wimax (world interoperability for microwave access), HSDPA (high speed downlink packet access) and the like to access a wireless network.

The network interface unit 403 can transceive data with a different user or a different electronic device via an accessed network or a different network linked to the accessed network.

The memory 405 may store a program configured to process and control each signal in the control unit 406 and may store a signal-processed video, an audio, or a data signal. And, the memory 405 may perform a function of temporarily storing a video, an audio, or a data signal inputted from the external device interface unit 404 or the network interface unit 403. Moreover, the memory 405 stores various OS, a middleware, and a platform.

The user interface unit 411 delivers a signal inputted by a user to the control unit 406 or transmits a signal transmitted from the control unit 406 to an external device (e.g., the remote controller 410). For instance, the user interface unit 411 is designed to receive such a control signal as power on/off, channel selection, screen setting and the like from the remote controller 410 according to such various communication schemes as an RF (radio frequency) communication scheme, an infrared-ray (IR) communication scheme and the like and process them. Or, the user interface unit is designed to transmit a control signal transmitted from the control unit 406 to the remote controller 410.

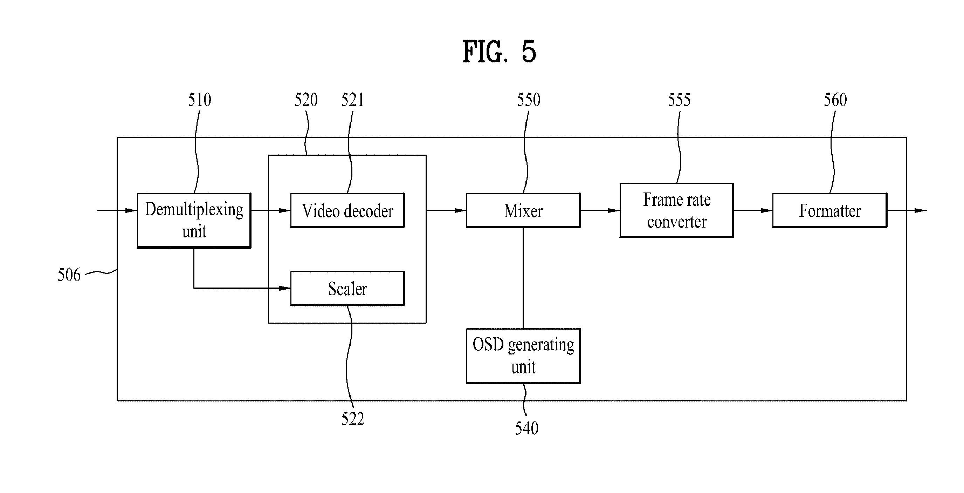

The control unit 406 demultiplexes an inputted stream via the broadcast reception module 401, the demodulation unit 402, the network interface unit 403, or the external device interface unit 404, processes demultiplexed signals, and may be then able to generate and output a signal used to output a video or an audio. The control unit 406 shall be explained in more detail with reference to FIG. 5.

The video output unit 407 generates an actuation signal in a manner of converting a video signal, a data signal, an OSD signal processed in the control unit 406 or a video signal, a data signal and the like received by the external device interface unit 404 to R, G, and B signal, respectively. The video output unit 407 can be implemented by a PDP, a LCD, an OLED, a flexible display, a 3D display and the like.

The audio output unit 408 receives a signal audio-processed in the control unit 406, e.g., a stereo signal, a 3.1 channel signal, or a 5.1 channel signal, and outputs the signal as an audio. The audio output unit 408 can be implemented by a speaker of various forms.

And, the power supply unit 409 supplies power for the overall wearable device 400. In particular, the power supply unit can supply power to the control unit 406 implementable by a form of system on chip (SOC), the video output unit 407 configured to display a video, and the audio output unit 408 configured to output an audio.

FIG. 5 is a more detail block diagram of a control unit depicted in FIG. 4.

As depicted in FIG. 5, the control unit 506 of the wearable device includes a demultiplexing unit 510, a video processing unit 520, an OSD generating unit 540, a mixer 550, a frame rate converter 555, a formatter 560, and the like. And, the control unit can be designed to further include an audio processing unit (not depicted) and a data processing unit (not depicted). This also belongs to the scope of right of the present invention.

The demultiplexing unit 510 demultiplexes an inputted stream. For instance, if MPEG-2 TS is inputted, the demultiplexing unit demultiplexes the MPEG-2 TS and may be then able to divide the MPEG-2 TS into a video, an audio, and a data signal, respectively.

The video processing unit 520 can perform a video processing for a demultiplexed video signal. To this end, the video processing unit 520 can be equipped with a video decoder 521 and a scaler 522. The video decoder 521 decodes the demultiplexed video signal and the scaler 522 performs scaling to enable the video output unit to output resolution of the decoded video signal. The video signal decoded in the video processing unit 520 is inputted to the mixer 550.

The OSD generating unit 540 generates an OSD signal according to a user input or by itself. Hence, the mixer 550 can mix the OSD signal generated by the OSD generating unit 540 and the decoded video signal, which is video-processed in the video processing unit 520.

The mixed signal is provided to the formatter 560. When the decoded broadcast video signal or an external input signal is mixed with the OSD signal, an OSD can be displayed on a broadcast video or an external input video in a manner of being overlaid.

The frame rate converter (FRC) 555 can convert a frame rate of an inputted video. For instance, the frame rate converter converts a frame rate of 60 Hz to a frame rate of 120 Hz or 240 Hz.

And, the formatter 560 receives an output signal of the frame rate converter 555 and outputs the signal in a manner of modifying a format of the signal to make the signal suitable for the video output unit. For instance, the formatter can output R, G, and B data signal. The R, G, and B data signal can be outputted as a low voltage differential signaling (LVDS) or a mini-LVDS.

FIG. 6 is a diagram for an exterior of a remote controller according to one embodiment of the present invention.

As depicted in FIG. 6 (a), a pointer 601, which corresponds to a movement of a remote controller 610, is displayed on a screen of a display device 600. A user can move the remote controller 610 left and right (FIG. 6 (b)) and top and bottom (FIG. 6 (c)) or rotate the remote controller. Since the pointer 601 is displayed on the screen according to the movement of the remote controller in a 3D space, the remote controller 610 may be named as a space remote controller.

As depicted in FIG. 6 (b), when a user moves the remote controller 610 to the left, the pointer 601 displayed on the screen of the display device 600 moves to the left as well. Meanwhile, information on the movement of the remote controller 610 detected by a sensor of the remote controller 610 is transmitted to the display device 600. The digital display device 600 can calculate a coordinate of the pointer 601 from the information on the movement of the remote controller 610. The display device 600 is designed to display the pointer 601 corresponding to the calculated coordination.

Meanwhile, as depicted in FIG. 6 (c), when a user moves the remote controller 610 to the bottom, the pointer 601 displayed on the screen of the display device 600 moves to the bottom as well.

Hence, a specific area within the screen of the display device 600 can be promptly selected using the remote controller 610 according to one embodiment of the present invention.

FIG. 7 is a detail block diagram for components of a remote controller depicted in FIG. 6.

As depicted in FIG. 7, a remote controller 710 includes a radio communication unit 714, a user input unit 715, a sensor unit 717, an output unit 716, a power supply unit 711, a storing unit 712, a control unit 713, and the like.

The radio communication unit 714 is designed to enable a communication to be performed with a random external device. In particular, according to one embodiment of the present invention, an RF module 714a is designed to perform a data communication with the display device 700 and an IR module 714b is designed to perform an infrared-ray communication with an external electronic device 730 (e.g., STB).

Hence, it is possible to make the remote controller 710 play a role of a relay, which forwards an IR infrared code value received from the display device 700 to the STB 730.

Moreover, according to one embodiment of the present invention, the remote controller 710 transmits a signal including information on the movement of the remote controller 710 and the like to the display device 700 via the RF module 714a.

And, the remote controller 710 can receive a signal transmitted by the display device 700 via the RF module 714a. The remote controller 710 can transmit a command on power on/off, channel change, volume adjustment and the like to the display device 700 via the IR module 714b if necessary.

The user input unit 715 consists of a key pad, a button, a touch pad, a touch screen, or the like.

The sensor unit 717 can be equipped with a gyro sensor 717a or an acceleration sensor 717b. The gyro sensor 717a can sense information on a movement of the remote controller 710. As an example, the gyro sensor 717a can sense the information on the movement of the remote controller 710 on the basis of x, y, and z axis. The acceleration sensor 717b can sense information on a moving speed of the remote controller 710 and the like. Meanwhile, the sensor unit may be further equipped with a distance measuring sensor. The distance measuring sensor can sense a distance between the display device 700 and the remote controller.

The output unit 716 can output a video or an audio signal corresponding to an operation of the user input unit 715 or a signal transmitted by the display device 700. As an example, the output unit 716 can be equipped with a LED module, which is lighted when the user input unit 715 is operated or a signal is transceived with the display device via the radio communication unit 714, a vibration module 716b generating a vibration, a sound output module 716c outputting a sound, or a display module 716d outputting a video.

The power supply unit 711 supplies power to each component of the remote controller 710. If the remote controller 710 does not move for a prescribed time, the power supply unit 711 stops supplying the power to the remote controller, thereby reducing power waste.

The storing unit 712 can store a program, an application data, and the like of various types necessary to control or operate the remote controller 710. And, the control unit 713 controls various matters related to a control of the remote controller 710. For instance, the control unit 713 can transmit a signal corresponding to a prescribed key operation of the user input unit 715 or a signal corresponding to a movement of the remote controller 710 sensed by the sensor unit 717 to the display device 700 or the STB via the radio communication unit 714.

Meanwhile, the display device depicted in FIG. 7 can be called a multimedia device, may correspond to a wearable device worn by a user, and may include all components of the remote controller 710 depicted in FIG. 7, by which the scope of right of the present invention may be non-limited. And, an external input means described in the following drawing includes the remote controller described in FIG. 4 to FIG. 7. For clarity, it is called an external input means.

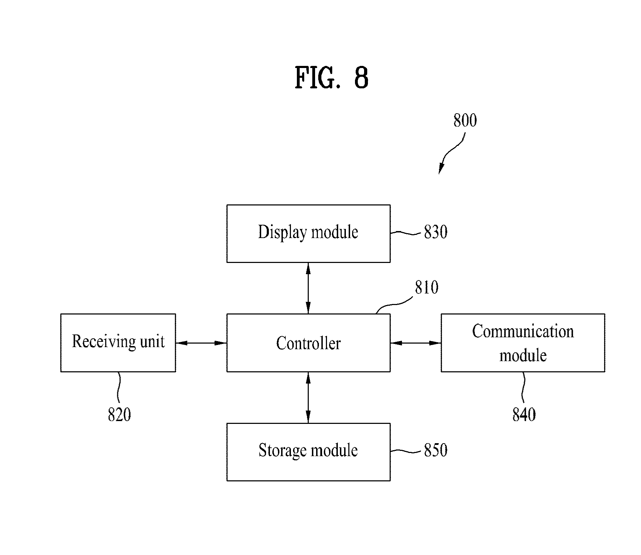

FIG. 8 is a detail block diagram for a configuration module of a wearable device according to one embodiment of the present invention.

As depicted in FIG. 8, a wearable device 800 according to one embodiment of the present invention includes a controller 810, a receiving unit 820, a display module 830, a communication module 840, and a storage module 850. Yet, a part of the modules can be added or deleted according to the necessity of those skilled in the art. Basically, the scope of right of the present invention should be determined according to the items written on the claims.

The receiving unit 820 can receive an RF signal including information on a movement of an external input means and the like. And, the receiving unit can include a plurality of sensing means. As one embodiment, a plurality of the sensing means can include such a sensing means as a gravity sensor, a terrestrial magnetism sensor, a motion sensor, a gyro sensor, an acceleration sensor, an infrared sensor, a tilt (inclination) sensor, a brightness sensor, an altitude sensor, a smell sensor, a temperature sensor, a depth sensor, a pressure sensor, a bending sensor, an audio sensor, a video sensor, a GPS (global positioning system) sensor, a touch sensor, and the like. The receiving unit 820 is a common name of the aforementioned various sensing means. The receiving unit senses various inputs and an environment of a user and may be then able to deliver a sensed result to the controller 810 to make the controller perform an operation according to the sensed result. The aforementioned sensing means can be included in the wearable device 800 as a separate element or can be included in the wearable device in a manner of being integrated to at least one element.

The display module 830 outputs an image and information on a display screen. The display module 830 can output an image based on content executed by the controller 810 or a control command of the controller 810. The display module 830 according to one embodiment of the present invention can output an image based on a control command of an external display device coupled with the wearable device 800. For instance, the display module 830 can display information of content executed by the external display device coupled with the wearable device 800. In this case, the wearable device 800 receives data from the external display device via the communication module 840 and can output an image based on the received data.

The communication module 840 can transceive data with the external display device by performing a communication using various protocols. The communication module 840 accesses a network in wired or wireless and can transmit/receive such a digital data as contents and the like. The wearable device 800 according to one embodiment of the present invention can perform a pairing and communication access with the external display device using the communication module 840 and can transceive data with the accessed external display device.

The storage module 850 includes a database. The database can store a predetermined weight data applied according to an external input means. A default value is stored in the predetermined weight data according to a type and a specification of the external input means. The predetermined weight data can be manually configured by a user.

The controller 810 controls overall of the wearable device 800 and can control information received via a data communication to be outputted via the display module 830. And, the controller can execute various applications and can process an internal data of the wearable device 800. When a first input means modification signal is received by the receiving unit, the controller 810 accesses the storage module, applies a predetermined weight to an input data of the sensed external input means, maps with a pointer value of the wearable device, and controls information outputted via the display module of the wearable device based on the mapped pointer value.

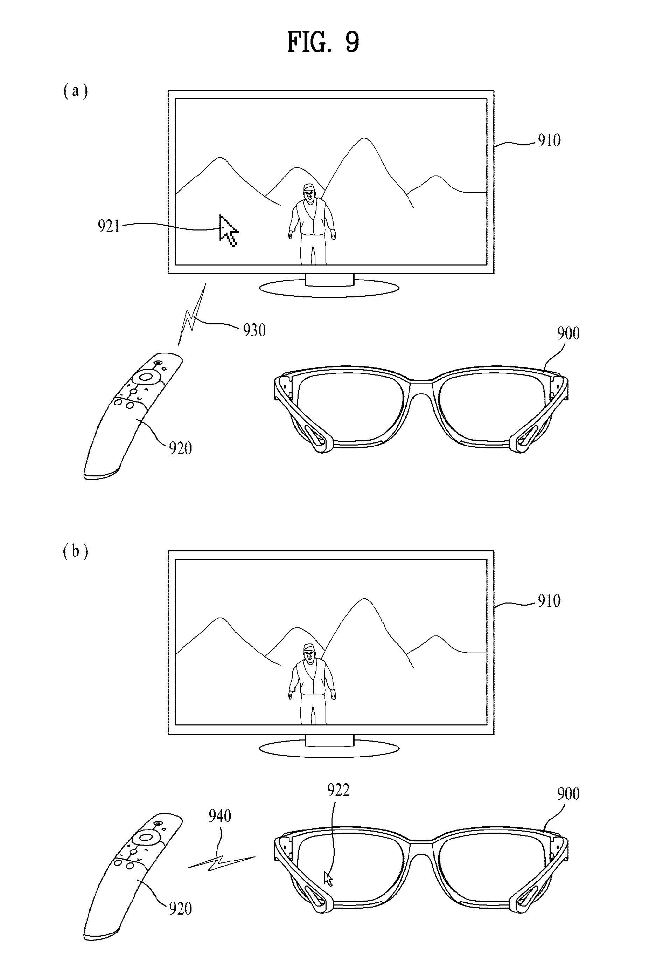

FIG. 9 is a diagram for explaining an example of receiving a first input means modification signal from an external input means by a wearable device according to one embodiment of the present invention.

As depicted in FIG. 9, When a first input means modification signal is received from an external input means 920 by the receiving unit, the controller of the wearable device according to one embodiment of the present invention accesses the storage module, applies a predetermined weight to an input data of a sensed external input means 920, maps with a pointer value of the wearable device 900, and controls information outputted via the display module of the wearable device based on the mapped pointer value.

As depicted in FIG. 9 (a), the wearable device 900 according to one embodiment of the present invention performs a pairing and a data communication with an external display device 910. The external display device 910 receives a first RF signal 930 from an external input means 920 and outputs a first pointer 921 based on the received first RF signal 930 via a display module included in the external display device 910. As depicted in FIG. 9 (b), if a first input means modification signal is received from the external input means 920 by the receiving unit of the wearable device 900, the external display device 910 stops outputting the first pointer 921 and the controller of the wearable device 900 outputs a second pointer 922 via the display module. The second pointer 922 is outputted based on a result by which the wearable device 900 has received a second RF signal 940 from the external input means 920. In this case, both the first pointer 921 and the second pointer 922 are outputted based on an input data of the external input means 920. The first pointer 921 is displayed in the external display device 910 and the second pointer 922 is displayed in the wearable device 900. Hence, the controller of the wearable device 900 configures a data on a movement of the second pointer 922 and the like in a manner of applying a ratio of a screen size of the external display device 910 and the wearable device 900 to the data. In particular, if the first input means modification signal is received from the external input means 920 by the receiving unit, the controller of the wearable device 900 accesses the storage module, applies a predetermined weight to an input data of the sensed external input means 920, maps with a pointer value of the wearable device 900, and controls information outputted from the display module of the wearable device based on the mapped pointer value. The input data of the external input means 920 may include data on a movement of the pointer, data on a size of the pointer, data on a shape of the pointer, and the like. And, the predetermined weight stored in the storage module is predetermined as a default value based on a unique identification number of the external input means or may be manually configured by a user.

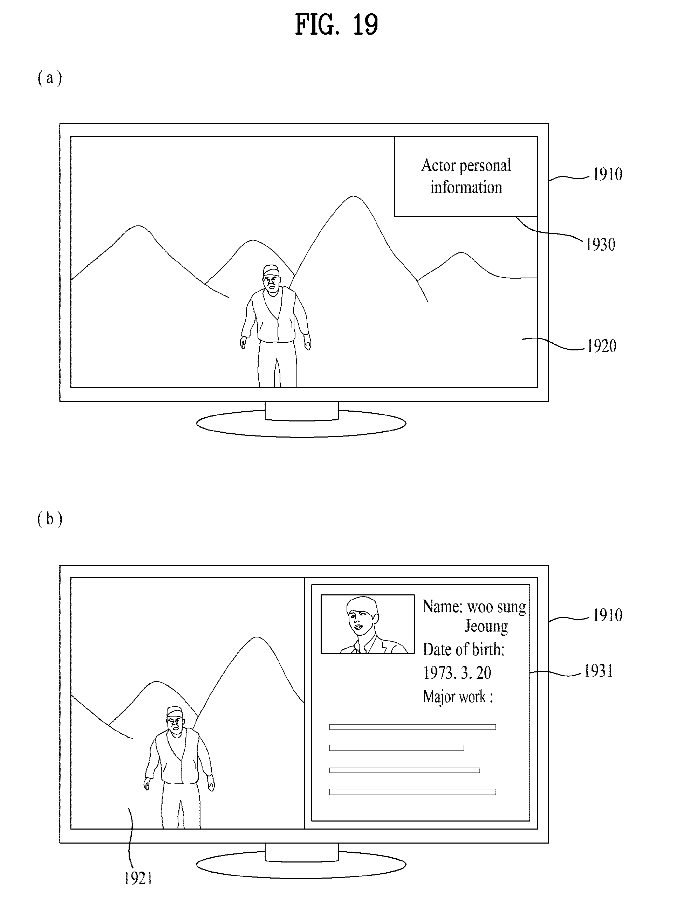

The first input means modification signal is a signal used to modify a means for controlling information outputted via the display module of the wearable device 900 from an internal user interface of the wearable device 900 to the external input means 920. The first input means modification signal can be generated by pushing a specific hard key of the external input means 920 or inputting a predetermined motion. And, a second input means modification signal explained in FIG. 19 is a signal used to modify a means for controlling information outputted via the display module of the wearable device 900 from the external input means 920 to the internal user interface of the wearable device 900. Similar to the method of generating the first input means modification signal, the second input means modification signal can be generated by pushing a specific hard key of the external input means 920 or inputting a predetermined motion.

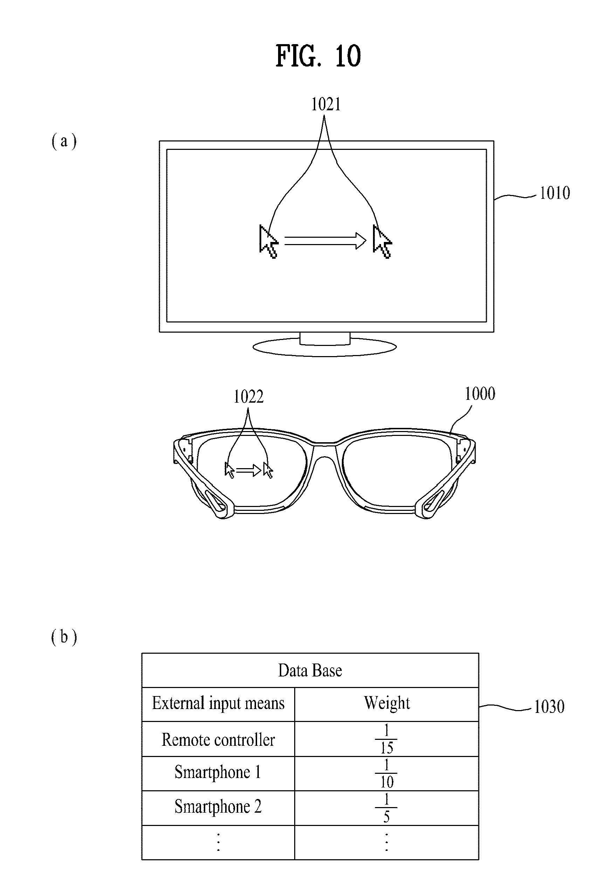

FIG. 10 is a diagram for explaining a different example of receiving a first input means modification signal from an external input means by a wearable device according to one embodiment of the present invention.

As depicted in FIG. 10 (a), if an identical input data is received from the external input means, data on a movement of the first pointer displayed in the external display device 1010 is different from data on a movement of the second pointer displayed in the wearable device 1000 according to one embodiment of the present invention. The data on the movement of the second pointer is a result of mapping with a pointer value of the wearable device 100 in a manner of applying a predetermined weight to the data on the movement of the first pointer. And, besides the data on the movement of the pointer, data on a size of the pointer and data on a shape of the pointer also correspond to the result to which the predetermined weight is applied.

As depicted in FIG. 10 (b), the storage module of the wearable device 1000 according to one embodiment of the present invention includes a database. The database stores a weight for an input data of the external input means. As depicted in FIG. 10 (b), the weight required to map with the pointer value of the wearable device is classified according to a unique identification number of the external input means, is predetermined as a default value based on the unique identification number of the external input means, and may be manually configured by a user.

In case of designing the wearable device as shown in FIG. 9 and FIG. 10, a user using an identical input means to control the wearable device and the external display device may have enhanced user convenience.

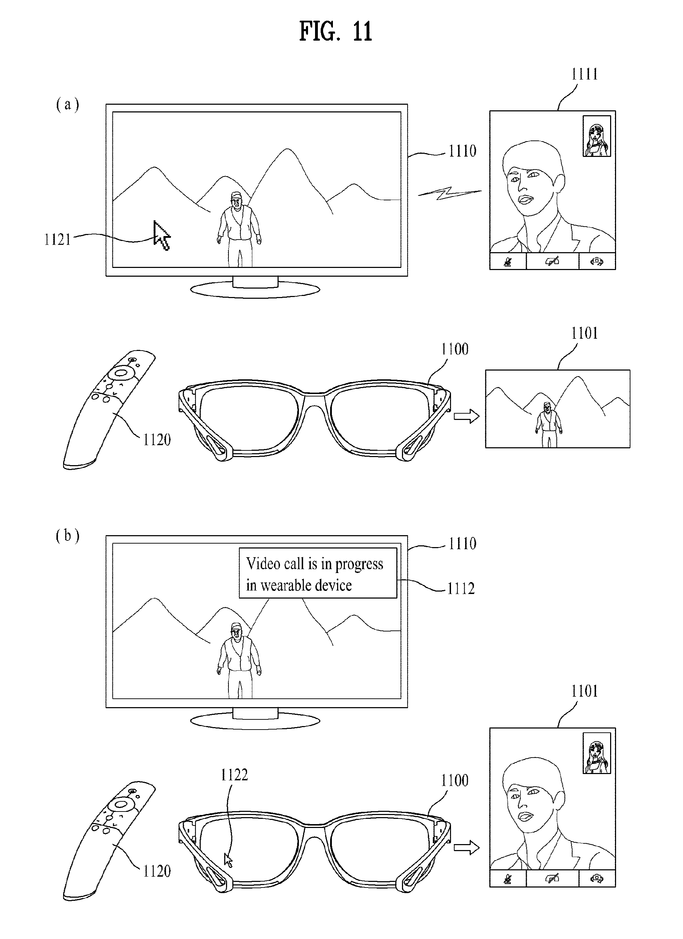

FIG. 11 is a diagram for explaining an example that an output of a wearable device is modified based on an event occurred in an external display device paired with the wearable device.

If an occurrence of a first type event of the external display device paired with the wearable device is detected, the controller of the wearable device 1100 according to one embodiment of the present invention receives information of the first type event using the communication module and outputs the received information of the first type event.

As depicted in FIG. 11 (a), the wearable device 1100 according to one embodiment of the present invention performs a pairing and a data communication with the external display device 1110, outputs contents identical to the contents outputted from the external display device via the display module 1101 before the first type event is not occurred in the external display device 1110, and outputs contents different from the contents outputted from the external display device 1110.

As depicted in FIG. 11 (b), if the occurrence of the first type event 1111 of the external display device 1110 paired with the wearable device 1100 is detected, the controller of the wearable device 1100 receives the information on the first type event using the communication module and controls the information on the received first type event to be outputted via the display module 1101. The first type event 1111 is an event occurred in the external display device. Information on the event is transmitted to the paired wearable device 1100 concurrent with the event. The first type event means an event from which the wearable device 1100 outputs the received information on the event via the display module. A video call event depicted in FIG. 11 is just an example. Content of the first type event 1111 can be configured by a user. In this case, if the first input means modification signal is received from an external input means 1120 by the receiving unit, the external display device 1110 stops outputting the first pointer 1121 displayed via the display module and the wearable device 1100 displays a second pointer 1122 via the display module. Moreover, if the occurrence of the first type event of the external display device 1110 is detected, the external display device 1110 automatically stops outputting the first pointer 1121, which is displayed via the display module, without receiving the first input means modification signal from the external input means 1120 and the wearable device 1100 can display the second pointer 1122 via the display module.

And, if the first type event occurs and the information on the first type event is outputted in the paired wearable device 1100, the external display device 1110 can display a message 1112 in a specific area of a screen to indicate that the information on the first type event is currently outputted in the wearable device 1100.

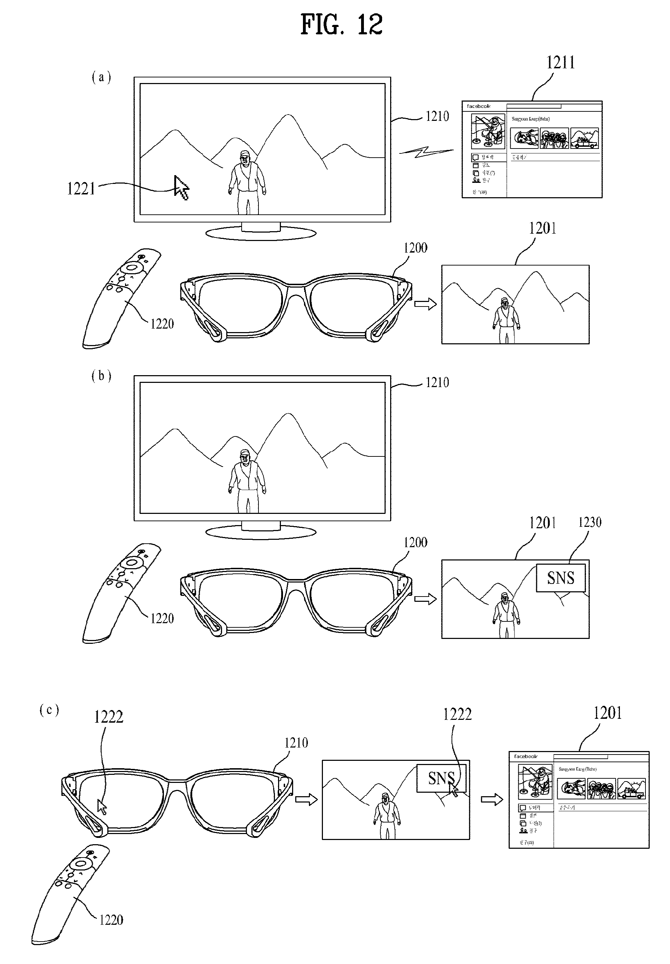

FIG. 12 is a diagram for explaining a different example that an output of a wearable device is modified based on an event occurred in an external display device paired with the wearable device.

If an occurrence of a second type event of the external display device 1210 paired with the wearable device is detected, the controller of the wearable device 1200 according to one embodiment of the present invention receives information of the second type event using the communication module, generates a notification notifying the received information on the second type event to a user, and outputs the generated notification.

As depicted in FIG. 12 (a), the wearable device 1200 according to one embodiment of the present invention performs a pairing and a data communication with the external display device 1210, outputs contents identical to the contents outputted from the external display device via the display module 1201 before the second type event is not occurred in the external display device 1210, and outputs contents different from the contents outputted from the external display device 1210.

As depicted in FIG. 12 (b), if the occurrence of the second type event 1211 of the external display device 1210 paired with the wearable device 1200 is detected, the controller of the wearable device 1200 receives the information on the first type event using the communication module, generates a notification 1230 notifying the received information on the second type event to a user, and controls the generated notification 1230 to be outputted via the display module of the wearable device 1200. The second type event 1211 is an event occurred in the external display device 1210. The notification 1230 notifying the occurrence of the event to a user is transmitted to the paired wearable device 1200 concurrent with the event. The second type event means an event from which the wearable device 1200 outputs the received notification 1230 on the event information via the display module. An SNS (social networking service) event depicted in FIG. 12 is just an example. Content of the second type event 1211 can be configured by a user. In this case, if the first input means modification signal is received from an external input means 1220 by the receiving unit, the external display device 1210 stops outputting the first pointer 1221 displayed via the display module and the wearable device 1200 displays a second pointer 1222 via the display module. Moreover, if the occurrence of the second type event of the external display device 1210 is detected, the external display device 1210 automatically stops outputting the first pointer 1221, which is displayed via the display module, without receiving the first input means modification signal from the external input means 1220 and the wearable device 1200 can display the second pointer 1222 via the display module.

And, if the second type event occurs and the notification for the second type event information is outputted in the paired wearable device 1200, the external display device 1210 can display a message (not depicted) in a specific area of a screen to indicate the occurrence of the second type event.

Moreover, as depicted in FIG. 12 (c), if the second pointer 1222 is pointed to the notification 1230 or a signal for selecting the notification 1230 is received by the wearable device 1200 based on an input data of the external input means 1220, the controller of the wearable device 1200 controls the information on the second event to be outputted via the display module of the wearable device 1200.

In case of designing the wearable device as shown in FIG. 11 and FIG. 12, a user using the wearable device may promptly correspond to an event occurred in the external display device paired with the wearable device.

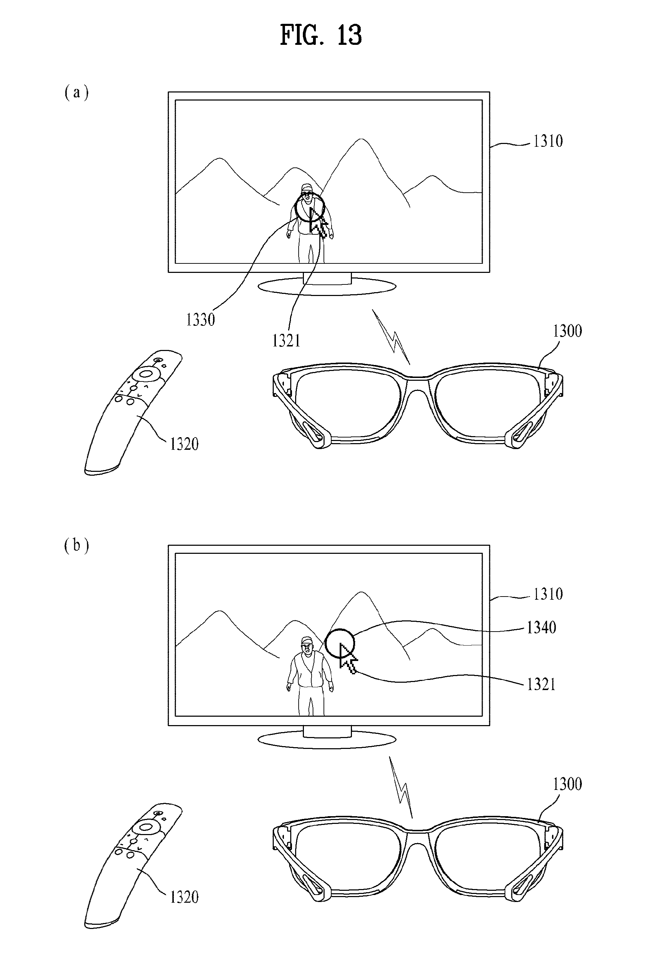

FIG. 13 is a diagram for explaining an example of receiving specific content information from an external display device by a wearable device paired with the external display device.

If a specific area 1330/1340 of a screen of the external display device 1310 paired with the wearable device is pointed by the external input means 1320, the controller of the wearable device 1300 according to one embodiment of the present invention receives content information corresponding to the pointed specific area 1330/1340 to be received from the external display device 1310.

As depicted in FIG. 13 (a), the wearable device 1300 performs a pairing and a data communication with the external display device 1310. Having received an input data from the external input means 1320, the external display device 1310 displays a first pointer 1321 via the display module based on the received input data. And, if a first specific area 1330 of the paired external display device 1310 is pointed by the first pointer 1321 based on the input data of the external input means 1320, the controller of the wearable device 1300 controls personal information corresponding to the first specific area 1330 to be received from the external display device 1310 using the communication module.

And, as depicted in FIG. 13 (b), if a second specific area 1340 of the paired external display device 1310 is pointed by the first pointer 1321 based on the input data of the external input means 1320, the controller of the wearable device 1300 controls location information corresponding to the second specific area 1340 to be received from the external display device 1310 using the communication module.

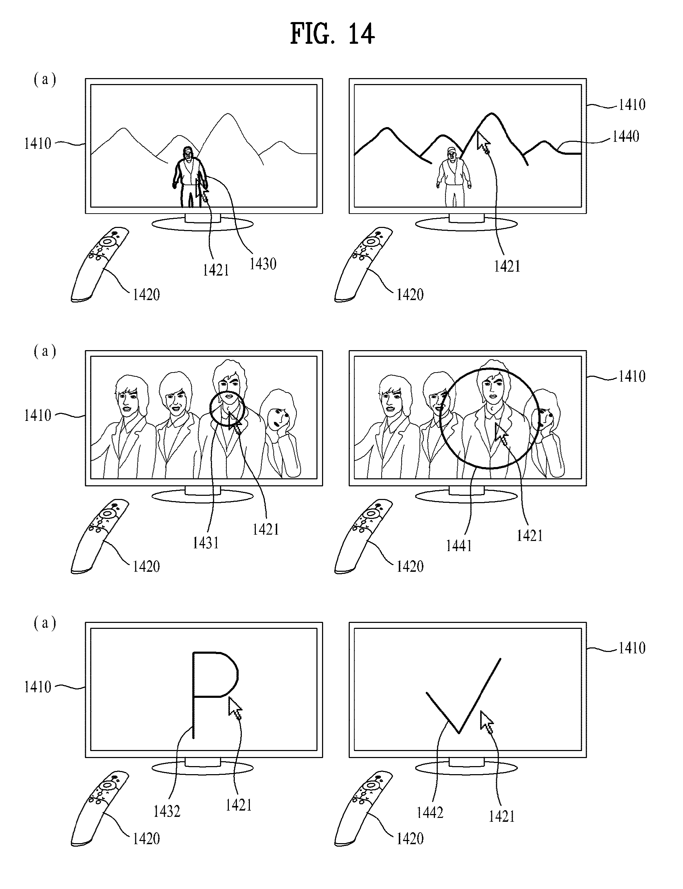

FIG. 14 is a diagram for explaining a different example of receiving specific content information from an external display device by a wearable device paired with the external display device.

As depicted in FIG. 14 (a), the external display device 1410 receives an input data from the external input means 1420 and displays a first pointer 1421 via the display module based on the received input data. And, if a specific hard key input signal is received from the external input means 1420, the external display device 1410 searches for an object data or a block data, which is included in the content currently outputted by the external display device 1410, corresponding to a specific area 1430/1440 pointed by the first pointer and transmits content information corresponding to the pointed specific area to the wearable device paired with the external display device based on the searched result.

And, as depicted in FIG. 14 (b), a size of a specific area to be pointed can be determined based on time of receiving a specific hard key input signal from the external input means 1420. For instance, if the specific hard key input signal received from the external input means 1420 is received as much as a first time space, a first specific area 1431 is pointed and if the specific hard key input signal received from the external input means 1420 is received as much as a second time space, it is able to configure a second specific area 1441 to be pointed. And, it is also possible to design to classify specific areas according to a specific hard key. For instance, if a first hard key is received, the first specific area 1431 is pointed. And, if a second hard key is received, the second specific area 1442 is pointed.

Moreover, the specific hard key of the external input means 1420 shown in FIG. 14 (a) and (b) may correspond to a button identical to the hard key generating the first input means modification signal.

And, as depicted in FIG. 14 (c), specific content information can be selected based on a data on a movement of the first pointer 1421 included in the input data of the external input means 1420 and a predetermined motion input 1432/1442.

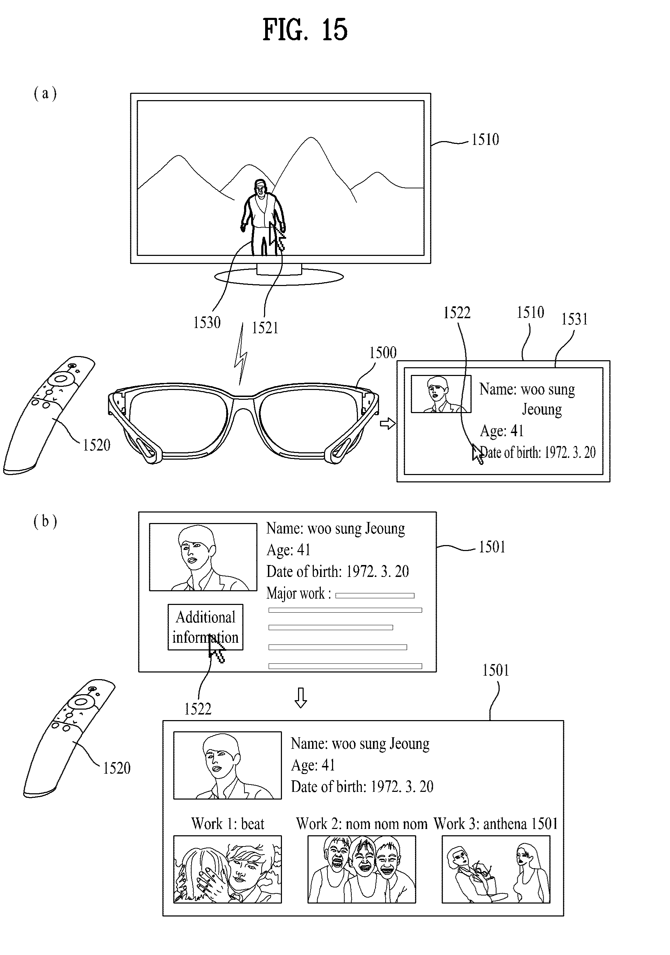

FIG. 15 is a diagram for explaining an example of receiving specific content information from an external display device and outputting a GUI in which the received content information is rearranged by a wearable device paired with the external display device according to one embodiment of the present invention.

If content information corresponding to a pointed specific area 1530 is received from the external display device 1510, the controller of the wearable device 1500 according to one embodiment of the present invention generates a GUI in which the received content information is rearranged and controls the generated GUI to be outputted via the display module 1501 of the wearable device.

As depicted in FIG. 15 (a), the wearable device 1500 performs a pairing and a data communication with the external display device 1510. Having received an input data from an external input means 1520, the external display device 1510 displays a first pointer 1521 via the display module based on the received input data. And, if a specific area 1530 of the external display device 1510 paired with the wearable device is pointed by the first pointer 1521 based on the input data of the external input means 1520, the controller of the wearable device 1500 controls personal information corresponding to the first specific area 1530 to be received from the external display device 1510 using the communication module. And, the controller of the wearable device 1500 generates a GUI 1531 in which the received personal information corresponding to the specific area 1530 is rearranged and controls the generated GUI to be outputted via the display module 1501.

Moreover, as depicted in FIG. 15 (b), if an input data is received from an external input means 1520, the controller of the wearable device 1500 according to one embodiment of the present invention displays a second pointer 1522 via the display module 1501 in a manner of applying a weight to the received input data. If a signal for requesting additional information is received from the external input means 1520, the wearable device can control additional information on the person to be outputted via the display module 1501.

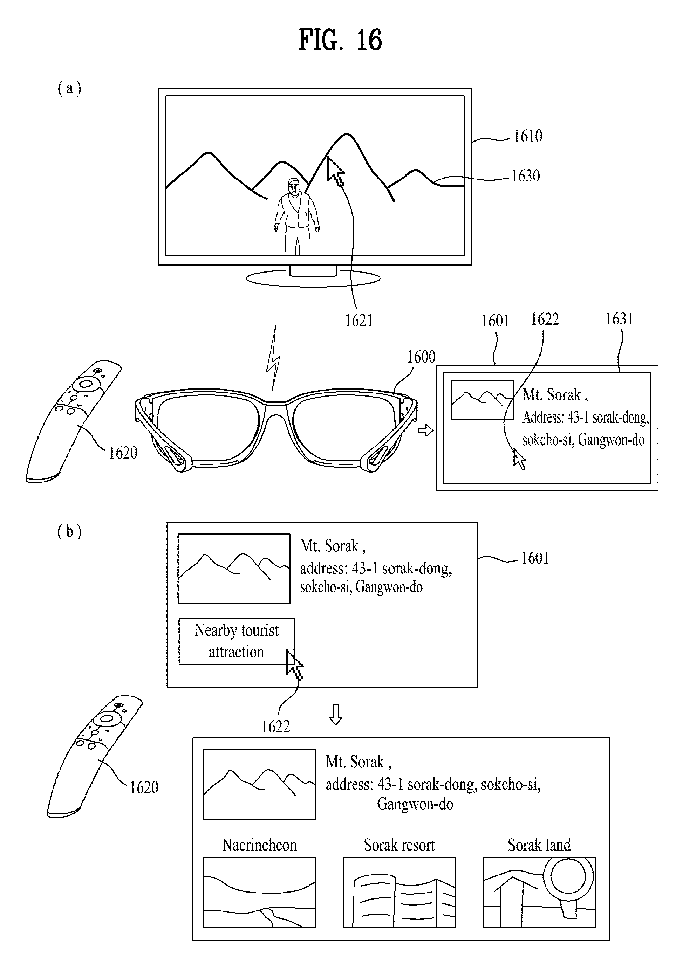

FIG. 16 is a diagram for explaining a different example of receiving specific content information from an external display device and outputting a GUI in which the received content information is rearranged by a wearable device paired with the external display device according to one embodiment of the present invention.

As depicted in FIG. 16 (a), the wearable device 1600 performs a pairing and a data communication with the external display device 1610. Having received an input data from an external input means 1620, the external display device 1610 displays a first pointer 1621 via the display module based on the received input data. And, if a specific area 1630 of the external display device 1610 paired with the wearable device is pointed by the first pointer 1621 based on the input data of the external input means 1620, the controller of the wearable device 1600 controls location information corresponding to the first specific area 1630 to be received from the external display device 1610 using the communication module. And, the controller of the wearable device 1600 generates a GUI 1631 in which the received location information corresponding to the specific area 1630 is rearranged and controls the generated GUI to be outputted via the display module 1601.

Moreover, as depicted in FIG. 16 (b), if an input data is received from an external input means 1620, the controller of the wearable device 1600 according to one embodiment of the present invention displays a second pointer 1622 via the display module 1601 in a manner of applying a weight to the received input data. If a signal for requesting additional information is received from the external input means 1620, the wearable device can control additional information on the location to be outputted via the display module 1601.

In case of designing the wearable device as shown in FIG. 13 to FIG. 16, since a user of the wearable device can obtain specific information included in the content outputted in the external display device paired with the wearable device, user convenience may be enhanced.

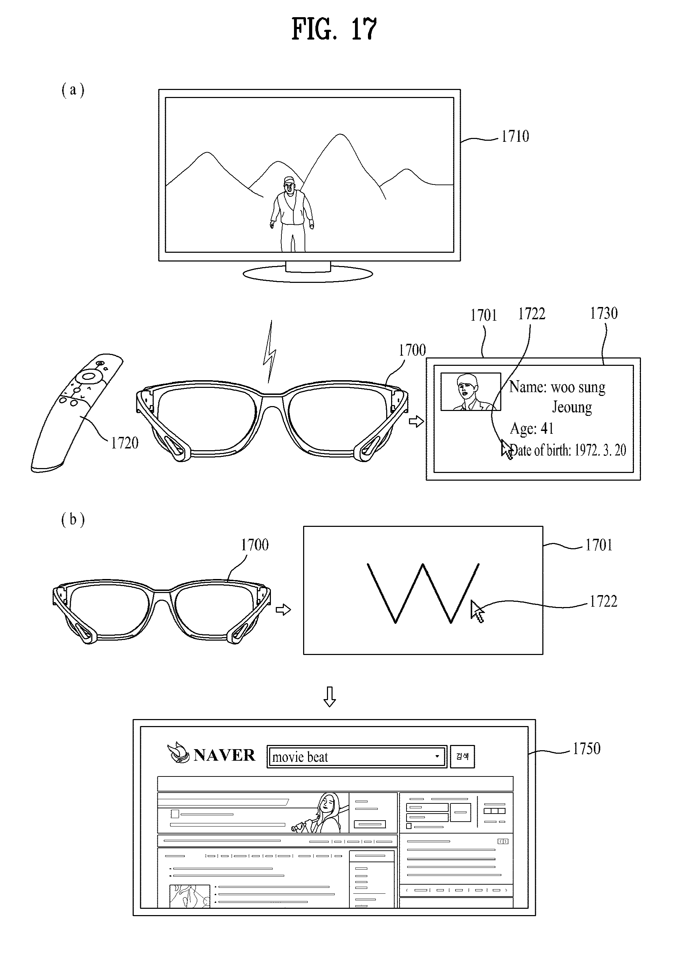

FIG. 17 is a diagram for explaining an example of outputting specific content information and detecting a predetermined motion input from a pointer value by a wearable device according to one embodiment of the present invention.

If a predetermined first motion input 1740 is detected from a mapped pointer value, the controller of the wearable device 1700 according to one embodiment of the present invention outputs a web page 1750 configured to search for content information. If a predetermined second motion input (not depicted) is detected from the mapped pointer value, the controller of the wearable device controls the content information and a GUI 1730 data in which the content information is rearranged to be stored in the storage module.

As depicted in FIG. 17 (a), the wearable device 1700 receives content information corresponding to a specific area from the external display device 1710 based on an input data of an external input means 1720 and may be then able to output a GUI 1730 in which the content information corresponding to the specific area is rearranged. And, as depicted in FIG. 17 (b), a result that a predetermined weight is applied to the input data of the external input means 1720 is mapped to a second pointer 1772 value of the wearable device 1700. If a predetermined first motion input 1740 is detected from the mapped second pointer value, the controller of the wearable device 1700 controls a web page configured to search for the content information to be outputted via the display module 1701.

Although it is not depicted in FIG. 17, if a predetermined second motion input is detected from the mapped second pointer value, the controller of the wearable device 1700 stores the content information and the GUI 1730 data in which the content information is rearranged. And, the first 1740 and second motion input can be configured by a user.

In case of designing the wearable device as mentioned in the foregoing description, the content information outputted from the wearable device can be controlled by performing a simple motion input without a separate process.

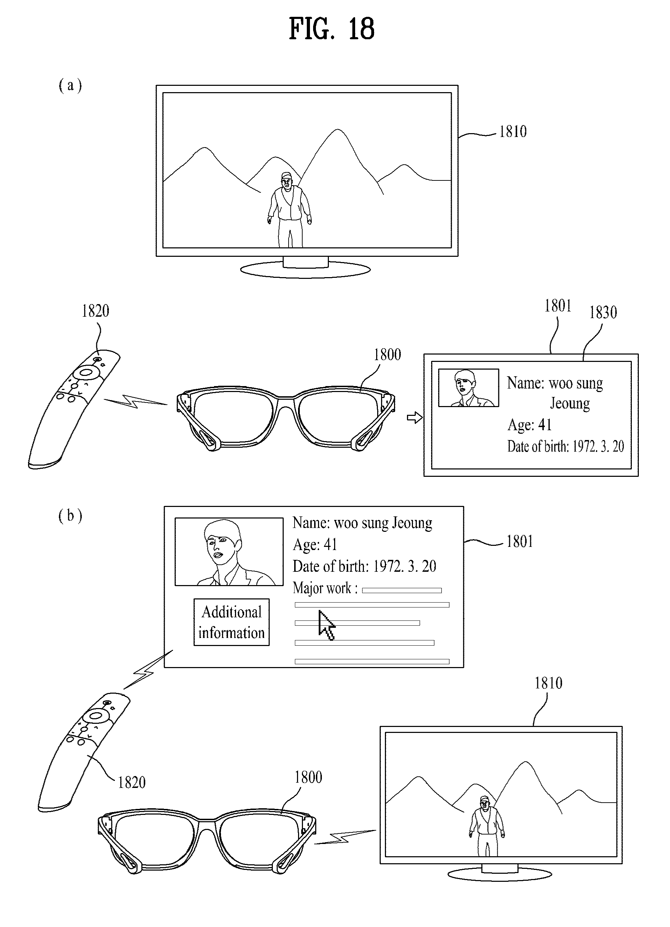

FIG. 18 is a diagram for explaining an example of receiving a second input means modification signal from an external input means by a wearable device according to one embodiment of the present invention.

As depicted in FIG. 18 (a), the wearable device 1800 receives content information corresponding to a specific area from the external display device 1810 based on an input data of an external input means 1820 and may be then able to output a GUI 1830 in which the content information corresponding to the specific area is rearranged via the display module 1801. And, as depicted in FIG. 18 (b), if a second input means modification signal is received from the external input means 1820 by the receiving unit, the wearable device controls the generated GUI 1830 data to be transmitted to the external display device 1810 using the communication module.

As mentioned earlier in FIG. 9, the first input means modification signal is a signal used to modify a means for controlling information outputted via the display module 1801 of the wearable device 1800 from an internal user interface of the wearable device 1800 to the external input means 1820. The first input means modification signal can be generated by pushing a specific hard key of the external input means 1820 or inputting a predetermined motion. And, a second input means modification signal is a signal used to modify a means for controlling information outputted via the display module 1801 of the wearable device 1800 from the external input means 1820 to the internal user interface of the wearable device 1800. Similar to the method of generating the first input means modification signal, the second input means modification signal can be generated by pushing a specific hard key of the external input means 1820 or inputting a predetermined motion.

FIG. 19 is a diagram for explaining a different example of receiving a second input means modification signal from an external input means by a wearable device according to one embodiment of the present invention.

As depicted in FIG. 18 (b), if a second input means modification signal is received from the external input means by the receiving unit, the controller transmits the generated GUI data to the external display device 1910.

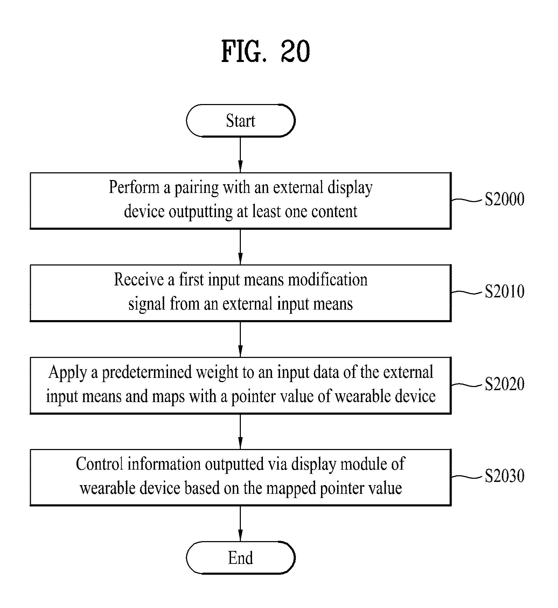

FIG. 20 is a flowchart for a method of controlling a wearable device according to one embodiment of the present invention. For those skilled in the art, FIG. 20 can be complementally comprehended with reference to the aforementioned FIG. 1 to FIG. 19.

The wearable device according to one embodiment of the present invention performs a pairing with the external display device outputting at least one content [S2000], receives a first input means modification signal from the external input means [S2010], applies a predetermined weight to an input data of the sensed external input means and maps with a pointer value of the wearable device [S2020], and controls information outputted via the display module of the wearable device based on the mapped pointer value [S2030].

In the step S2000, the wearable device according to one embodiment of the present invention performs a pairing with the external display device, which outputs at least one content, using the communication module. The wearable device can transceive data with the external display device by performing a communication via various protocols. And, the communication module can transmit and receive such a digital data as content and the like in a manner of accessing a network in wired or wireless.

In the step S2010, the receiving unit of the wearable device receives the first input means modification signal from the external input means. The first input means modification signal is a signal used to modify a means for controlling information outputted via the display module of the wearable device from an internal user interface of the wearable device to the external input means. The first input means modification signal can be generated by pushing a specific hard key of the external input means or inputting a predetermined motion.

In the step S2020, if the first input means modification signal is received from the external input means by the receiving unit, the controller of the wearable device accesses the storage module and applies a predetermined weight to an input data of the sensed external input means. The input data of the external input means may include data on a movement of a pointer, data on a size of the pointer, data on a shape of the pointer, and the like. And, the predetermined weight stored in the storage module is predetermined as a default value based on a unique identification number of the external input means and may be manually configured by a user.

In the step S2030, the information outputted via the display module of the wearable device is controlled based on the mapped pointer value.

For clarity of explanation, each diagram is explained in a manner of being divided. Yet, it is possible to design a new embodiment to implement the new embodiment by combining the embodiments, which are described in each of the diagrams. And, a wearable device and a method of controlling therefor according to one embodiment may not limitedly apply to the composition and method of the aforementioned embodiments. The aforementioned embodiments may be configured in a manner of being selectively combined the whole of the embodiments or a part of the embodiments to achieve various modifications.

While the present invention has been described and illustrated herein with reference to the preferred embodiments and diagrams thereof, the present invention may be non-limited to the aforementioned embodiments and it will be apparent to those skilled in the art that various modifications and variations can be made therein without departing from the spirit and scope of the present invention. Thus, it is intended that the present invention covers the modifications and variations of this invention that come within the scope of the appended claims and their equivalents.

And, both an apparatus invention and a method invention are explained in the present specification and the explanation on the both of the inventions can be complementally applied, if necessary.

## Claims

1. A wearable device, comprising:
- a receiving unit configured to receive a signal transmitted from an external input means;
- a storage module configured to store a weight on an input data of the external input means;
- a communication module configured to perform a data communication with an external display device paired with the wearable device;
- a display module configured to output information; and
- a controller configured to apply a predetermined weight to an input data of a sensed external input means by accessing the storage module when a first input means modification signal is received from the external input means by the receiving unit, map with a pointer value of the wearable device and control the information outputted via the display module of the wearable device based on the mapped pointer value.

2. The wearable device of claim 1, wherein if an occurrence of a first type event of the external display device paired with the wearable device is detected, the controller is configured to receive information of the first type event using the communication module and output the received information of the first type event.

3. The wearable device of claim 1, wherein if an occurrence of a second type event of the external display device paired with the wearable device is detected, the controller is configured to receive information of the second type event using the communication module, generate a notification to notify the received information of the second type event to a user and output the generated notification.

4. The wearable device of claim 1, wherein if a specific area of a screen of the external display device paired with the wearable device is pointed by the external input means, the controller is configured to receive content information corresponding to the pointed specific area from the external display device.

5. The wearable device of claim 4, wherein if the content information corresponding to the pointed specific area is received from the external display device, the controller is configured to generate a GUI in which the received content information is rearranged and output the generated GUI.

6. The wearable device as claimed in any one of the preceding claims 1-5, wherein if a predetermined first motion input is detected from the mapped pointer value, the controller is configured to output a web page for searching for the content information.

7. The wearable device as claimed in any one of the preceding claims 1-5, wherein if a predetermined second motion input is detected from the mapped pointer value, the controller is configured to store the content information and a GUI data in which the content information is rearranged.

8. The wearable device as claimed in any one of the preceding claims 1-5, wherein if a second input means modification signal is received from the external input means by the receiving unit, the controller is configured to transmit the generated GUI data to the external display device.

9. A method of controlling a wearable device, the method comprising:
- performing a pairing with an external display device outputting at least one content;
- receiving a first input means modification signal from an external input means;
- applying a predetermined weight to an input data of the external input means and mapping with a pointer value of the wearable device; and
- controlling information outputted via a display module of the wearable device based on the mapped pointer value.

10. The method of claim 9, further comprising: if an occurrence of a first type event of the external display device paired with the wearable device is detected,
- receiving information of the first type event; and
- outputting the received information of the first type event.

11. The method of claim 9, further comprising: if an occurrence of a second type event of the external display device paired with the wearable device is detected,
- receiving information of the second type event;
- generating a notification to notify the received information on the second type event to a user; and
- outputting the generated notification.

12. The method of claim 9, further comprising: if a specific area of a screen of the external display device paired with the wearable device is pointed by the external input means, receiving content information corresponding to the pointed specific area from the external display device.

13. The method of claim 12, further comprising:
- generating a GUI in which the received content information is rearranged; and
- outputting the generated GUI.

14. The method of claim 13, further comprising: if a predetermined first motion input is detected from the mapped pointer value,
- outputting a web page for searching for the content information.

15. The method of claim 13, further comprising: if a second input means modification signal is received from the external input means by the receiving unit,
- transmitting the generated GUI data to the external display device.
